# EUROPÄISCHE PATENTSCHRIFT

(11) **EP 2 069 210 B1**
(45) Veröffentlichungstag und Bekanntmachung des Hinweises auf die Patenterteilung: **15.02.2012**
(21) Anmeldenummer: 07803383.4
(22) Anmeldetag: 10.09.2007
(51) Int. Cl.: B65D 1/02, B29C 45/14

(54) **VERPACKUNGSBEHÄLTER UND VERFAHREN ZU SEINER HERSTELLUNG**
PACKAGING CONTAINER AND METHOD OF PRODUCING THE SAME
RÉCIPIENT DE CONDITIONNEMENT ET SON PROCÉDÉ DE FABRICATION

(30) Priorität: 22.09.2006 DE 102006044693; 23.11.2006 DE 102006055236
(43) Veröffentlichungstag der Anmeldung: 17.06.2009
(73) Patentinhaber: Fischbach KG Kunststoff-Technik, 51766 Engelskirchen (DE)
(72) Erfinder: HELMENSTEIN, Achim, 51766 Engelskirchen (DE)
(74) Vertreter: von Kreisler Selting Werner
(86) Internationale Anmeldenummer: PCT/EP2007/059478
(87) Internationale Veröffentlichungsnummer: WO 2008/034733

(56) Entgegenhaltungen:
- EP-A- 0 895 938
- EP-A- 1 147 990
- DE-A1- 19 901 713
- DE-B- 2 057 612
- JP-A- 3 111 261
- JP-A- 6 218 762
- JP-A- 10 100 241

## Beschreibung

Die Erfindung betrifft einen Verpackungsbehälter aus Kunststoff mit einer Sollbruchstelle sowie ein Verfahren zur Herstellung eines derartigen Verpackungsbehälters.

Verpackungsbehälter müssen oft eine hohe Barrierewirkung gegen Wasserdampf, Gase oder Lösungsmittel haben, um das Durchtreten dieser Substanzen durch die Behälterwand zu verhindern. So muss beispielsweise bei einem Verpackungsbehälter, der Lösungsmittel enthält, sichergestellt sein, dass das Lösungsmittel nicht durch die Wand entweicht. Andererseits muss bei einem Verpackungsbehälter, der eine aushärtbare Kunststoffmasse enthält, sichergestellt sein, dass keine härtenden bzw. reaktiven Gase oder Dämpfe eindringen. Verpackungsbehälter für verderbliche Produkte, wie Nahrungsmittel, müssen eine ausreichende Barrierewirkung gegen Umwelteinflüsse haben.

Andere Verpackungsbehälter müssen eine Barriere gegen migrierende Stoffe, wie Öle und Farbstoffe, besitzen, welche aus der Verpackung oder durch die Verpackungswand nach außen austreten können.

Verpackungsbehälter sollten so ausgebildet sein, dass sie vom Anwender mühelos geöffnet werden können, möglichst ohne Einsatz von Spezialwerkzeugen oder auch ohne jegliches Werkzeug. Derartige Verpackungsbehälter haben eine Sollbruchstelle, an der die Behälterwand durch Reißen, Schneiden, Brechen oder Abschlagen geöffnet werden kann.

FR 2844781 beschreibt eine Kartusche zur Aufnahme aushärtbarer plastischer Massen, bei der der Hals einen Nippel aufweist, welcher durch eine Dünnstelle mit der übrigen Wand des Halses verbunden ist. Zum Öffnen wird eine separate Düse auf den Nippel aufgesetzt, und dieser wird von dem Hals abgebrochen. Danach wird die Düse auf ein Gewinde des Halses aufgeschraubt. Eine Schwierigkeit besteht darin, dass die am Hals vorgesehene Dünnstelle des Kunststoffmaterials eine verminderte Barrierewirkung hat. Dadurch können Dampf und Gase in das Behälterinnere diffundieren mit der Folge, dass die im Hals befindliche plastische Masse aushärtet und den Hals verstopft. Eine derartige Kartusche mit verstopftem Hals ist unbrauchbar.

DE 198 18 455 A1 beschreibt eine Kartusche aus Kunststoff in Form eines zylindrischen Grundkörpers, dessen eines Ende einen herausreißbaren Deckel aufweist. Der Deckel ist von einer Sollbruchstelle umgeben, und er ist mit einem Griff verbunden. Auch hier bildet die Sollbruchstelle eine Dünnstelle von verminderter Barrierewirkung.

In U.S. 5,054,642 ist ein zylindrischer Behälter beschrieben, der einen aufgesetzten Deckel aufweist. Der Deckel hat einen aus Metall bestehenden Bördelrand und die Deckelwand ist mit diesem durch Umspritzen verbunden. Die aus Kunststoff bestehende Deckelwand enthält eine Sollbruchstelle, die von einer Aluminiumfolie bedeckt ist. Der durch die Sollbruchstelle umgebene Teil der Deckelwand kann mit einer Grifflasche herausgerissen werden, um den Behälter zu öffnen.

In EP 1 055 607 A2 ist ein Behälter beschrieben, der einen nachträglich aufgebrachten separaten Deckel aufweist. Der Deckel besteht aus einer Deckelwand aus Kunststoff, die an ihrer Unterseite mit einem als Sperrschicht wirkenden Film beschichtet ist. In der Deckelwand befinden sich Sollbruchstellen.

Ein Verpackungsbehälter, von dem der Oberbegriff des Patentanspruchs 1 ausgeht, ist beschrieben in FR 2 578 783 A. Der Verpackungsbehälter ist hier eine Getränkeflasche, die einen Kunststoffkörper und einen davon abstehenden Hals aufweist. Der Hals besteht aus einem festen Wandteil und einem daran angeschweisten abtrennbaren Wandteil, das mit dem festen Wandteil durch eine Sollbruchstelle verbunden ist. Über der Sollbruchstelle befindet sich ein weiches Band, das die Sollbruchstelle außen umgibt. Dieses Band reißt beim Öffnen der Flasche auf.

Der Erfindung liegt die Aufgabe zugrunde, einen Verpackungsbehälter in Form einer Kartusche zur Aufnahme auspressbarer Massen so auszubilden, dass die auspressbare Masse durch eine hohe Barrierewirkung des Verpackungsbehälters gegen externe Einflüsse geschützt ist, wobei der Verpackungsbehälter dennoch auf einfache Weise zu öffnen ist.

Der erfindungsgemäße Verpackungsbehälter ist durch den Anspruch 1 definiert.

Der Verpackungsbehälter weist eine Sollbruchstelle auf, die von einer mit dem festen Wandteil und dem abtrennbaren Wandteil verbundenen, die Permeation vermindernden Sperrschicht überbrückt ist.

Die Sollbruchstelle zeichnet sich durch eine in diesem Bereich geringere Festigkeit bzw. Widerstandskraft der Verpackungswand aus. Dies kann erreicht werden durch Verringerung der Wanddicke, Unterbrechung der Wand durch Perforation, Fenster oder Kerben, oder durch Verwendung eines Materials geringer Festigkeit für die Sollbruchstelle, bzw. Kombinationen dieser Varianten.

Da die Sperrschicht an der Innenseite des Wandteils des Behälters angeordnet ist, ist sie vor äußeren Einwirkungen weitgehend geschützt. Die Sperrschicht vermindert die Permeation von Wasserdampf, Gasen, Lösungsmitteln u. dgl. durch die Sollbruchstelle in das Verpackungsgut oder aus dem Verpackungsgut heraus. Die Barrierewirkung der Sperrschicht ist größer als diejenige des umgebenden Kunststoffs. Die Sperrschicht kann eine Metallschicht enthalten. Sie besteht beispielsweise aus einer kunststoffbeschichteten Aluminiumfolie oder einer aluminiumbedampften Kunststofffolie. Andere Sperrschichten bestehen aus weiteren Kunststoffen, wie beispielsweise EVOH, einem Barrierewerkstoff, der im Lebensmittelbereich eingesetzt wird, oder aus HDPE (polyäthylenhoher Dichte). Ebenfalls sind Sperrschichten aus PP, PA, PET oder auch PVC möglich, ebenso Multi-Layer-Sperrschichten aus Kombinationen der einzelnen Rohstoffe. Die Sperrschicht hat vom Material her eine höhere spezifische Barrierewirkung als der die Sollbruchstelle umgebende Kunststoff. Die Barrierewirkung ist vorzugsweise um mindestens den Faktor 5 größer als diejenige des umgebenden Kunststoffs, aus dem das Wandteil des Verpackungsbehälters besteht, bei gleicher Wanddicke.

Die Durchlässigkeit (Permeation) von Kunststoff- und Verpackungsmaterialien ist eine materialspezifische Größe. Man unterscheidet beispielsweise zwischen Wasserdampfdurchlässigkeit, die relevant ist für wasserdampfreaktive Produkte, wie Silikone und MS-Polymere-Produkte, und Gasdurchlässigkeit, die relevant ist für gasreaktive Produkte oder Produkte, welche vor Lösungsmittelverlust geschützt werden sollen.

Für die Sperrschicht eignen sich verschiedene ein- oder mehrschichtige Foliensysteme. Eine optimale Barrierewirkung besitzen Metallfolien, wie z. B. Aluminium. Ein anderes Verbundmaterial mit hoher Barrierewirkung enthält folgende Schichten: PP, PA, EVOH, PA, PE und Einbettmasse.

Alternativ hierzu kann die Sperrschicht durch mehrkomponentiges Spritzgießen erzeugt werden, wobei die einzelnen Kunststoffschmelzen gleichzeitig oder nacheinander eingespritzt werden können.

Bei Verwendung einer vorgefertigten Sperrschicht kann diese nach Art der bekannten Insert-Technik während des Spritzvorganges mit dem Verpackungsbehälter verbunden werden, nämlich durch Einlegen der Sperrschicht oder eines die Sperrschicht tragenden Trägers in das Spritzgießwerkzeug vor dem Beginn des Einspritzens. Bei dem mehrkomponentigen Spritzgießen werden unterschiedliche Kunststoffschmelzen gleichzeitig oder nacheinander eingespritzt. Eine andere Möglichkeit der Anbringung der Sperrschicht besteht darin, diese in einem anschließenden Prozess anzubringen, beispielsweise durch Einschweißen der Sperrschicht durch Heizelementschweißen, Vibrationsschweißen, Ultraschallschweißen, Reibschweißen oder auch durch Verkleben.

Die Einstückigkeit des Behälterkörpers bedeutet, dass Seitenwand und Stirnwand aus einem einzigen integralen Teil bestehen. Dies schließt nicht aus, dass eine oder alle Wände mehrere Schichten aufweisen können.

Neben der Verringerung der Permeation kann eine weitere Wirkung der Sperrschicht darin bestehen, dass die Migration von Fremdstoffen aus dem Behälterinneren in die Sollbruchstelle oder durch diese hindurch verhindert wird. So wird vermieden, dass Substanzen aus dem Behälterinneren die Sollbruchstelle beschädigen oder durch die Sollbruchstelle nach außen dringen. Dies ist besonders auch dort notwendig, wo die Sollbruchstelle durch eine Perforation gebildet wird oder sogar durch Lücken Öffnungen aufweist.

Der Verpackungsbehälter besteht in einer einstückigen Kartusche zur Aufnahme auspressbarer Massen, wobei der Verpackungsbehälter einen das feste Wandteil bildenden Hals aufweist, der durch eine das abtrennbare Wandteil bildende Kappe verschlossen ist. Derartige Kartuschen haben im allgemeinen eine Wanddicke, die hinreichend groß ist, um das verpackte Gut gegen Eindringen schädlicher Substanzen zu schützen. Im Bereich der Sollbruchstelle ist die Wanddicke geringer. Hier ist eine Sperrschicht mit erhöhter Sperrwirkung, vorzugsweise in Form einer Haube, vorgesehen. Wenn die Haube eine geschlossene Stirnwand hat, wird das Positionieren der Haube in der Spritzgussform oder in einer Schweißmaschine erleichtert. Generell kann die Sperrschicht aber auch lediglich aus einem rohrförmigen Teil bestehen, das vorzugsweise beidendig offen ist.

Bei einer bevorzugten Ausführung der Erfindung ist vorgesehen, dass das abtrennbare Wandteil außen oder innen liegende Füllstege aufweist. Die Füllstege sind aus spritzgusstechnischen Gründen erforderlich, wenn das Einspritzen des Kunststoffs in die Spritzgussform an dem kappenseitigen Ende erfolgt, um die Kartusche mit dem abtrennbaren Wandteil einstückig herstellen zu können. Dann muss der Formkern in der Hohlform abgestützt und zentriert werden, ohne dass der Durchgang des flüssigen Kunststoffs versperrt wird. Hierzu sind normalerweise Nuten in dem Formkern vorgesehen. Wenn der Formkern erfindungsgemäß mit einer Haube aus dem Sperrschichtmaterial bedeckt wird, würden solche Nuten durch die Haube verschlossen. Die außen liegende Füllstege ergeben sich dadurch, dass entsprechende Nuten an der Hohlform, die den Hals und die Kappe formt, vorgesehen sind. Die so erzeugten Füllstege können häufig auch als Griffteile zum Abdrehen der Kappe benutzt werden. Bei der einstückigen Herstellung einer Kartusche kann es ebenfalls erforderlich sein, solche Füllstege auch im Bereich der Sollbruchstelle vorzusehen. Dadurch wird eine Formfüllung des Behälters über den Anspritzpunkt, welcher sich im Regelfall am abtrennbaren Wandteil befindet, möglich gemacht. Des Weiteren wird die Empfindlichkeit der Sollbruchstelle gegenüber Beschädigungen durch äußere Einflüsse reduziert, da solche Füllstege zu einem späteren Zeitpunkt auch eine stützende oder auch stärkende Wirkung für die Sollbruchstelle haben.

Generell ist es von Vorteil, dass der Verpackungsbehälter einen Handgriff zum Zerstören der Sollbruchstelle und Entfernen eines Deckels bzw. einer Kappe aufweist. Dazu kann es zweckmäßig sein, dass dieser Handgriff die Außengeometrie des Verpackungsbehälters nicht wesentlich überragt, damit keine Verformung oder Beschädigung der Sollbruchstelle durch Packautomaten, Druckmaschinen oder ähnliches erfolgen kann. Des Weiteren spart es Packraum bei Lagerung und Transport des Verpackungsbehälters, wenn der Handgriff die Außenkontur des Verpackungsbehälters nicht überragt.

Die Sperrschicht besteht dann vorzugsweise aus einer mehrschichtigen Verbundfolie, wobei eine Kunststoffschicht sicherstellt, dass eine innige Verbindung mit dem angespritzten oder angeschweißten Kunststoff des Wandteils entsteht.

Im Folgenden wird unter Bezugnahme auf die Zeichnungen ein Ausführungsbeispiel der Erfindung näher erläutert.

Es zeigen:
Fig. 1 einen Verpackungsbehälter in Form einer Kartusche zur Aufnahme auspressbarer Massen,
Fig. 2 einen Längsschnitt durch den Hals und die Kappe des Verpackungsbehälters von Fig. 1 und
Fig. 3 eine perspektivische Ansicht eines Teils des Verpackungsbehälters,

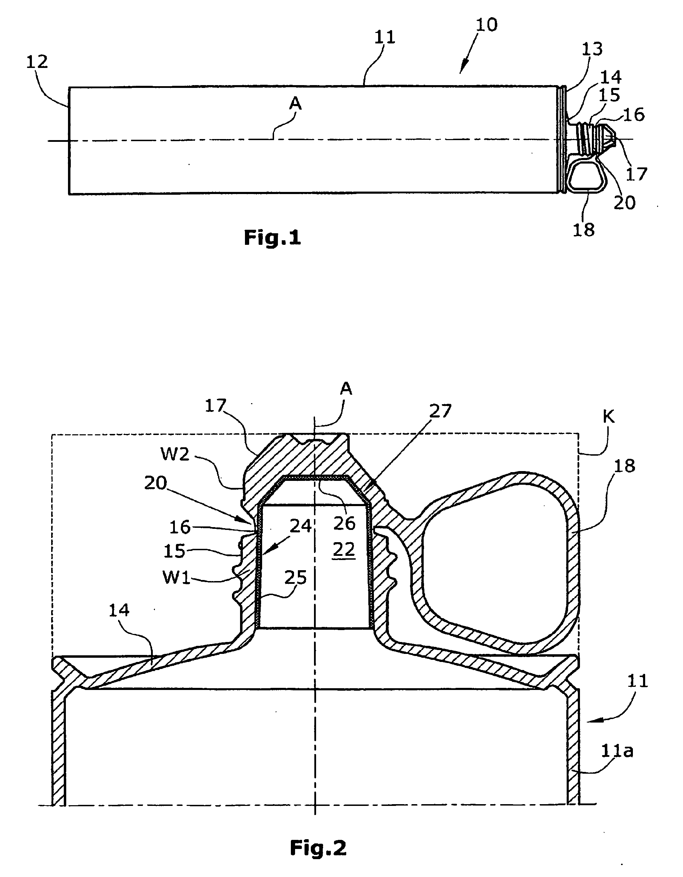

Der Verpackungsbehälter der Figuren 1 - 3 besteht aus einer Kartusche 10 zur Aufnahme auspressbarer Massen, mit einem zylindrischen langgestreckten Behälterkörper 11, der eine Seitenwand 11a aufweist und am rückwärtigen Ende 12 offen ist und am vorderen Ende 13 eine Stirnwand 14 aufweist. Die Längsachse des Behälterkörpers ist mit A bezeichnet. Von der Stirnwand 14 steht ein rohrförmiger Hals 15 mit Außengewinde ab. Der Hals 15 bildet ein festes Wandteil W1. An den Hals 15 schließt sich ein Abschnitt 16 verringerter Wandstärke als Sollbruchstelle 20 an. Hierauf folgt eine Kappe 17, welche das Ende des Halses 15 verschließt. Die Kappe 17 bildet ein abtrennbares Wandteil W2. Dieses ist einstückig mit einem Handgriff 18 verbunden, der hier als Ring zum Abreißen ausgebildet ist. Der Handgriff ist hier in der vertikalen Längsebene (in Richtung der Achse A) des Verpackungsbehälters angeordnet.

Die gesamte Kartusche 10 bildet ein einstückig im Spritzgussverfahren aus Kunststoff hergestelltes Produkt.

Der Behälterkörper 11 wird mit einer auspressbaren plastischen Masse gefüllt, beispielsweise mit einem Dichtmittel oder einem Kleber. Dann wird die Kartusche an ihrer Rückseite durch Einführen eines Kolbens verschlossen. Der Kolben dient auch zum Auspressen der Masse aus dem Hals 15 nach Entfernen der Kappe 17.

Die Sollbruchstelle 20 befindet sich zwischen dem festen Wandteil W1 und dem abtrennbaren Wandteil W2 (Fig. 2). Die Sollbruchstelle 20 hat eine gegenüber dem festen Wandteil W1 verringerte Wandstärke. Sie bildet die Verbindung des Wandteils W1 mit der Kappe 17, die den Endabschluss bildet.

In dem von dem festen Wandteil W1 umschlossenen Innenraum 22 des Halses 15 befindet sich die Sperrschicht 24. Diese liegt eng an der Innenseite des festen Wandteils W1 an. Sie besteht aus einem rohrförmigen Bereich 25, der am unteren Ende offen ist und einem stirnseitigen Bereich 26, der das obere Ende verschließt. Die Sperrschicht 24 bildet somit eine Haube 27, die auf einen (nicht dargestellten) Werkzeugkern einer Spritzgussform aufgesetzt werden kann. Beim Umspritzen der Haube 27 mit Kunststoff entstehen die Konturen des Halses 15 und der Kappe 17, wobei die Haube 27 die Innenkontur bildet. Die Haube 27 erstreckt sich bis zum unteren Bereich des Halses 15. Alternativ zum Umspritzen der Haube 27 in der Spritzgussform kann die Haube 27 auch auf einen Schweißdom aufgeführt und anschließend innerhalb des Halses 15 und der Kappe 17 verschweißt werden.

Die Sperrschicht 24 besteht bei diesem Ausführungsbeispiel aus einer Aluminium-Verbundfolie, die eine außen liegende Kunststoffschicht aufweist, welche sich verschmelzend mit dem Kunststoff des festen Wandteils W1 und des abtrennbaren Wandteils W2 verbindet.

Zum Öffnen des Verpackungsbehälters wird an dem Handgriff 18 gezogen, worauf die Sollbruchstelle 20 aufreißt. Dabei zerreißt auch die Sperrschicht 24. Die Kappe 17 verbleibt dann an dem Handgriff 18 und wird mit diesem entsorgt. Auf das Gewinde des Halses 15 kann eine Düse aufgeschraubt werden.

Der Handgriff 18 befindet sich vollständig innerhalb der seitlichen Kontur K des Behälterkörpers 11.

Die Sollbruchstelle 20 muss nicht notwendigerweise aus dem Kunststoff des Wandtells W1 bestehen. Sie kann auch offene Fenster enthalten, die nur von der Sperrschicht 24 gebildet werden. In diesem Fall ist es vorteilhaft, wenn zur kompletten Formfüllung oder zur Stabilisierung der Sollbruchstelle sich Stege von der Kappe 17 zu dem Wandteil W1 erstrecken.

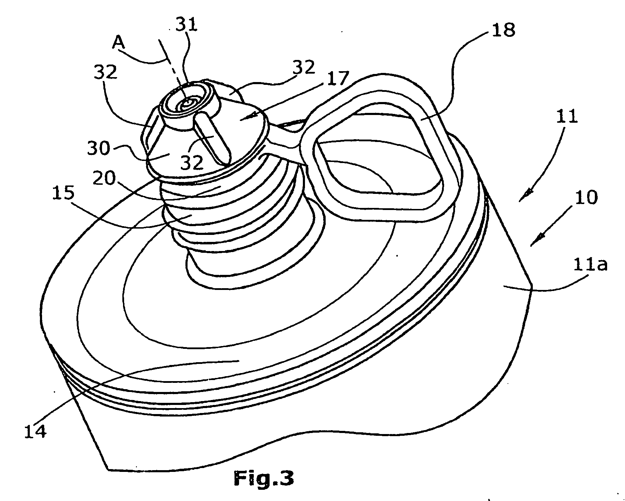

Wie Fig. 3 zeigt, weist die Kappe 17 eine kegelstumpfförmige Wand 30 auf, von der zentrisch ein erhabener Ring 31 absteht. Von diesem Ring erstrecken sich radiale Füllstege 32 sternförmig nach außen über die kegelstumpfförmige Wand 30. Die Füllstege 32 sind durch Nuten in dem entsprechenden Formwerkzeug entstanden. Durch diese Nuten strömt der stirnseitig in die Kappe 17 eingepresste flüssige Kunststoff zu der Sollbruchstelle 20 und weiter zu dem Wandteil W1, um schließlich die gesamte Kartusche 10 zu bilden. Wegen der Haube 27 wurde auf die Anordnung entsprechender Füllstege im Innern der Kappe 17 verzichtet.

In jedem Fall erhöht die Sperrschicht 24 die Barrierewirkung der Sollbruchstelle, so dass sie das Hindurchdringen von Substanzen durch die Sollbruchstelle 20 erschwert.

Die Mindest-Wanddichte des Verpackungsbehälters beträgt 0,5 mm, vorzugsweise 1,2 mm und insbesondere 2,8 mm. Vorzugsweise sind das feste Wandteil und das abtrennbare Wandteil starr. Die Mindestwanddicke der Sperrschicht beträgt 0,05 mm, vorzugsweise 0,1 mm und insbesondere bis zu 0,5 mm.

Eine weitere Ausführungsform (nicht gezeichnet) besteht darin, eine Kappe oder einen (Schraub-) Verschluss derart mit dem Behälter zu verbinden, dass die Sperrschicht die Kappe/den Verschluss mit dem Behälter verbindet und beim Abschrauben des Verschlusses oder beim Entfernen der Kappe die Sperrschicht zerstört wird.

Es kann ebenfalls eine Permeation vermindernde Sperrschicht auch noch partial unter einen Bereich der Sollbruchstelle eingebracht sein, z. B. nur dort, wo angerissen werden soll. Dies hat zum Zweck, eine Sollbruchstelle mit spezifizierter Permeationsdicke und resultierender Aufreißkraft zu erzeugen.

Als Materialen für die Sperrschicht eignen sich vorzugsweise EVOH oder HDPE sowie Verbundfolien, die eine Metallschicht oder mindestens eine Sperrschicht aus EVOH, HDPE, PA oder PP enthalten.

## Patentansprüche

1. Verpackungsbehälter aus Kunststoff mit einem einstückigen Behälterkörper (11), der eine Seitenwand (11a) und eine Stirnwand (14) aufweist, wobei im Bereich der Stirnwand ein festes Wandteil (W1) und ein abtrennbares Wandteil (W2) vorgesehen sind, die durch eine Sollbruchstelle (20) verbunden sind, wobei ein das feste Wandteil (W1) bildender Hals (15) durch eine das abtrennbare Wandteil (W2) bildende Kappe (17) verschlossen ist und die Sollbruchstelle (20) von einer mit dem festen Wandteil (W1) und dem abtrennbaren Wandteil (W2) verbundenen, die Permeation vermindernden Sperrschicht (24) überbrückt ist,
**dadurch gekennzeichnet,**
**dass** der Verpackungsbehälter eine einstückige Kartusche (10) zur Aufnahme auspressbarer Massen ist,
**dass** die Barrierewirkung der Sperrschicht (24) größer als diejenige des umgebenden Kunststoffs ist, und
**dass** die Sperrschicht (24) ein die Innenseite des Halses (15) und der Kappe (17) bedeckendes rohrförmiges Teil (27) umfasst.

2. Verpackungsbehälter nach Anspruch 1, **dadurch gekennzeichnet, dass** das rohrförmige Teil (27) eine Haube mit innerhalb der Kappe (17) geschlossenen Stirnwand ausbildet.

3. Verpackungsbehälter nach Anspruch 1 oder 2, **dadurch gekennzeichnet, dass** das trennbare Wandteil (W2) einstückig mit dem Behälterkörper (11) hergestellt ist und außen oder innen liegende Füllstege (32) aufweist.

4. Verpackungsbehälter nach einem der Ansprüche 1 - 3, **dadurch gekennzeichnet, dass** das abtrennbare Wandteil (W2) einstückig mit dem Behälterkörper (11) hergestellt ist und dass im Bereich der Sollbruchstelle (20) Füllstege zwischen dem festen und dem abtrennbaren Wandteil vorhanden sind.

5. Verpackungsbehälter nach einem der Ansprüche 1 - 4, **dadurch gekennzeichnet, dass** die Sperrschicht (24) aus einer Verbundfolie aus einer Metallschicht und mindestens einer Kunststoffschicht besteht.

6. Verpackungsbehälter nach einem der Ansprüche 1 - 5, **dadurch gekennzeichnet, dass** an das abtrennbare Wandteil (W2) ein Handgriff (18) angeformt ist.

7. Verpackungsbehälter nach Anspruch 1, **dadurch gekennzeichnet, dass** der Behälterkörper (11) zylindrisch ist und eine Längsachse (A) aufweist und dass an der Kappe (17) ein Handgriff (18) vorgesehen ist, der in einer radial zu der Längsachse verlaufenden vertikalen Längsebene angeordnet ist.

8. Verfahren zum Herstellen eines Verpackungsbehälters nach einem der Ansprüche 1 - 7, **dadurch gekennzeichnet, dass** vor der Formung der Wandteile (W1, W2) im Spritzgussverfahren eine vorgefertigte Sperrschicht (24) in Form einer Haube (27) in die Spritzgussform eingelegt wird.

## Claims

1. A packaging container of plastic, comprising a one-pieced container body (11) having a side wall (11a) and end wall (14), wherein, in the region of said end wall, a fixed wall portion (W1) and a severable wall portion (W2) are provided which are connected to each other by a predetermined weakening zone (20), wherein a neck (15) forming the fixed wall portion (W1) is closed by a cap (17) forming the severable wall portion (W2), and said predetermined weakening zone (20) is bridged by a barrier layer (24) effective to reduce permeation, said barrier layer (24) being connected to the fixed wall portion (W1) and the severable wall portion (W2),
**characterized in**
**that** the packaging container is a one-pieced cartridge (10) for containing substances adapted to be pressed out, that the barrier effect of the barrier layer (24) is greater than that of the surrounding plastic, and that the barrier layer (24) comprises a tubular part (27) covering the inner side of the neck (15) and of the cap (17).

2. The packaging container according to claim 1, **characterized in that** the tubular part (27) is a hood with an end wall closed inside the cap (17).

3. The packaging container according to claim 1 or 2, **characterized in that** the severable wall portion (W2) is produced in one piece with the container body (11) and is provided with outer or inner injection-assistance webs (32).

4. The packaging container according to any one of claims 1 - 3, **characterized in that** the severable wall portion (W2) is produced in one piece with the container body (11) and that, in the region of the predetermined weakening zone (20), injection-assistance webs are provided between the fixed and the severable wall portions.

5. The packaging container according to any one of claims 1 - 4, **characterized in that** the barrier layer (24) consists of a composite film comprising a metallic layer and at least one plastic layer.

6. The packaging container according to nay one of claims 1 - 5, **characterized in that** a handle (18) is molded to the severable wall portion (W2).

7. The packaging container according to claim 1, **characterized in that** the container body (11) is cylindrical and has a longitudinal axis (A), and that the cap (17) is provided with a handle (18) arranged in a vertical longitudinal plane extending radially to said longitudinal axis.

8. A method for producing a packaging container according to any one of claims 1 - 7, **characterized in that**, prior to injection-molding the wall portions (W1,W2), a prefabricated barrier layer (24) in the form of a hood (27) is inserted into the injection mold.

## Revendications

1. Récipient de conditionnement en matière plastique comprenant un corps de réceptacle (11) monobloc ayant une paroi latérale (11a) et une paroi de front (14), une partie de paroi fixe (W1) et une partie de paroi détachable (W2) étant prévues dans la région de ladite paroi de front, lesdites parties étant connectées par un point de rupture théorique (20), un col (15), qui forme la partie de paroi fixe (W1), étant fermée par un capuchon (17) formant ladite partie de paroi détachable (W2), et ledit point de rupture théorique (20) étant comblé par une couche de barrière (24) connectée à ladite partie de paroi fixe (W1) et ladite partie de paroi détachable (W2), ladite couche de barrière réduisant la perméation,
**caractérisé en ce**
**que** ledit récipient de conditionnement est une cartouche monobloc (10) pour contenir des masses exprimables, que l'effet de barrière de ladite couche de barrière (24) est supérieur à celui de la matière plastique entourant, et que la couche de barrière (24) comprend un élément tubulaire (27) recouvrant la face interne dudit col (15) et dudit capuchon (17).

2. Récipient de conditionnement selon la revendication 1, **caractérisé en ce que** ledit élément tubulaire (27) forme un capot avec une paroi frontale fermée dans ledit capuchon (17).

3. Récipient de conditionnement selon les revendications 1 ou 2, **caractérisé en ce que** la partie de paroi détachable (W2) est fabriquée d'un seul tenant avec ledit corps du récipient (11) et comprend des âmes de remplissage (32) extérieurs ou intérieurs.

4. Récipient de conditionnement selon l'une quelconque des revendications 1-3, **caractérisé en ce que** la partie de paroi détachable (W2) est fabriquée d'un seul tenant avec ledit corps de récipient (11) et que des âmes de remplissage sont prévus entre la partie de paroi fixe et la partie de paroi détachable dans la région du point de rupture théorique (20).

5. Récipient de conditionnement selon l'une quelconque des revendications 1-4, **caractérisé en ce que** ladite couche de barrière (24) est formée d'un film de matière composite constituée d'une couche métallique et au moins une couche de matière plastique.

6. Récipient de conditionnement selon l'une quelconque des revendications 1-5, **caractérisé en ce qu'**une poignée (18) est moulée sur ladite partie de paroi détachable (W2).

7. Récipient de conditionnement selon la revendication 1, **caractérisé en ce que** ledit corps du récipient (11) est cylindrique et a un axe longitudinal (A) et qu'une poignée (18) est prévue sur le capuchon (17), disposée dans un plan longitudinal vertical s'étendant radialement par rapport à l'axe longitudinal.

8. Récipient de conditionnement selon l'une quelconque des revendications 1-7, **caractérisé en ce qu'**avant le moulage des pièces de paroi (W1, W2) par moulage par injection, une couche de barrière (24) préfabriquée sous forme d'un capot (27) est placée dans le moule de moulage par injection.
